# EUROPEAN PATENT APPLICATION

(11) **EP 4 375 780 A1**
(43) Date of publication of application: **29.05.2024**
(21) Application number: 22209815.4
(22) Date of filing: 28.11.2022
(51) Int. Cl.: G05B 23/02

(54) **COMPUTER-IMPLEMENTED METHOD AND COMPUTER PROGRAM PRODUCT FOR SAFETY ANALYSIS IN A TECHNICAL SYSTEM AND APPARATUS**

(71) Applicant: Siemens Aktiengesellschaft, 80333 München (DE)
(72) Inventor: Zeller, Marc, 81243 München (DE)
(74) Representative: Siemens Patent Attorneys

(57) **Abstract**

A computer-implemented method for safety analysis is proposed which comprises the steps:
a) providing a controller model and a controlled process model, each including control states including a failure state causing one hazard,
b) applying guidewords to commands for providing first further control states and obtaining an extended controller model, each first further control state being a possible unsafe control action,
c) applying a first simulation to each possible unsafe control action for identifying unsafe control actions,
d) applying the guidewords to feedback information for providing second further control states and obtaining an extended controlled process model, each second further control state being a possible causal scenario,
e) applying a second simulation to each possible causal scenario for identifying causal scenarios, and
f) deriving redefined safety constraints using the identified causal scenarios.

## Description

Independent of the grammatical term usage, individuals with male, female or other gender identities are included within the term.

The present invention relates to a computer-implemented method, a computer program product and an apparatus for safety analysis in a technical system.

Apart from the traditional safety analysis techniques such as Failure Mode and Effects Analysis and Fault Tree Analysis, Systems-Theoretic Process Analysis (STPA) has been proposed in recent time to better cope with complex software-intensive systems in order to increase the safety of a technical system. First case studies showed that STPA is an effective approach to software safety requirements which is important for upcoming autonomous systems.

However, STPA is a time-intensive methodology, especially for engineers with little or no prior experience in the STPA. Moreover, the STPA must be conducted continuously throughout the product development each time the system design is modified in order to assess the technical system in terms of functional safety and ensure that the safety requirements and the system design are consistent. To meet these challenges and at the same time increase the safety of technical systems, it is known from the state of the art to combine the STPA with other techniques.

In [1] and [2], the STPA is combined with Model Based System Engineering (MBSE). Further, in [3], the results of a STPA are verified using a Systems Modeling Language.

Hence, the support of engineers to carry out STPA are key to introduce the method in a broader scope and to provide benefit for the safety analysis of complex software-intensive systems.

It is one object of the present invention to improve the failure safety of a technical system.

According to a first aspect, a computer-implemented method for safety analysis in a technical system including a controller and a controlled process controlled by commands from the controller is proposed. The method comprising:
a) providing a controller model and a controlled process model, wherein each of the controller model and the controlled process model includes N control states including at least a failure state causing at least one hazard which can occur in the technical system, with N ≥ 1,
b) applying specific guidewords to the commands associated to the at least one failure state for providing a first set of further control states and extending the provided controller model by adding the first set of further control states for obtaining an extended controller model, wherein each further control state of the first set is a possible unsafe control action,
c) applying a first simulation to each possible unsafe control action based on the extended controller model and the controlled process model for identifying a set of unsafe control actions,
d) applying the specific guidewords to feedback information being provided from the controlled process model to the controller model and associated to the at least one failure state for providing a second set of further control states and extending the provided controlled process model by adding the second set of further control states for obtaining an extended controlled process model, wherein each further control state of the second set is a possible causal scenario,
e) applying a second simulation to each possible causal scenario based on the extended controller model and the extended controlled process model for identifying a set of causal scenarios, wherein each causal scenario of the set of causal scenarios corresponds to a certain one of the feedback information causing the at least one hazard, wherein each of the unsafe control actions of the identified set results from a corresponding causal scenario of the identified set of causal scenarios, and
f) deriving redefined safety constraints using the identified set of causal scenarios.

According to the first aspect, the failure safety and the reliability of the technical system are improved by an automatically performed safety analysis of the technical system.

With the above-described computer-implemented method, it is possible, by a linking the STPA as a model-based engineering approach with the first and second simulation for automating the STPA, to automatically identify all unsafe control actions and causal scenarios which lead to undesired hazards and accidents in an existing technical system and/or in the process of development of a technical system.

This advantageously increases the failure safety and reliability of the individual technical components of the technical system as well as the technical system as a whole while reducing the effort, such as the reducing of computational and human resources, for performing such an automatic identification according to the computer-implemented method according to the first aspect. In detail, no operator with a high level of technical knowledge is required since the above-described computer-implemented method is carried out fully automatically, thus eliminating the need for operator intervention or control due to the automation, which in turn saves the above-mentioned resources. Further, since the computer-implemented method according to the first aspect is carried out fully automatically, the development of a technical system or a technical safety system is speeded up.

A further advantage of the above-described computer-implemented method is that it makes it possible to seamlessly embed the STPA and a MBSE into a development process of a technical system by using the controller model and the controlled process model, whereby avoiding inconsistencies between the individual technical components of the technical system during the development process of the technical system.

In addition, a further advantage of the above-described computer-implemented method is that it can be executed automatically in a Continuous Integration/Continuous Deployment-pipeline (CI/CD-pipeline), thus improving the providing and developing of software safety requirements and safety software itself.

A computer-implemented method is a method which involves the use of a computer, a computer network or other programmable apparatus, where one or more features are realized wholly or partly by means of a computer program.

The term "safety analysis" is understood to mean, in particular, that potential safety risks in a technical system are reliably identified and analyzed to the extent that they can no longer occur or can only occur to a limited (tolerable) extent.

Examples for a technical system are a train door system for controlling the door of a train, a chemical reactor system for controlling components of the chemical reactor such as a valve, an adaptive cruise control system of a vehicle for controlling the motion of the vehicle by controlling its brakes and/or its motor and/or an aircraft control system for controlling individual control components of the aircraft.

Examples for a controller and a controlled process are dependent on the type of the technical system. In particular, if the technical system is a train door system, the controller is a train door controller and an exemplary controlled process is the controlling of closing and opening of the controlled object, e.g. the train door.

Preferably, the controller model is a representation of the physical controller of the technical system, wherein the controlled process model is a representation of the physical controlled process including at least an actuator, a sensor and the controlled object of the technical system.

A control state and/or a further control state can be a (motion) state of the controlled object, a command or an instruction of the controller, a resting state of the controlled object, a feature with respect to the controlled object such as a door obstruction in the controlled object if the controlled object is a door, a delay of a command or an instruction of the controller and/or a feedback information by the controlled process.

In particular, a failure state can be a command, an instruction and/or a state in the technical system which causes the at least one hazard.

A hazard is a risk or a danger in a technical system which may lead to injuries or deaths of human beings or damage the environment. An example of a hazard is that a train door closes while a person is still standing in the doorway. Independent of the grammatical term usage, individuals with male, female or other gender identities are included within the term.

Examples for a command from the controller are: "Open-Door-Command", "Stop-Opening-Door-Command", "Close-Door-Command" and/or "Stop-Closing-Door-Command".

According to an embodiment, the method includes, prior to step a), the method steps:
defining a technical system including a controller and a controlled process controlled by commands from the controller,
deriving, from the defined technical system, at least one hazard which can occur in the technical system and which can lead to at least one accident, and
providing the defined technical system.

The defining of the technical system can further comprise a defining of constraints of the technical system, the system context and/or further system components.

An accident in a technical system can damage the environment or can lead to injuries or deaths of human beings. An example of an accident is an injury of a person because the person stands in the doorway while a door closes. In particular, the at least one hazard is a state which is only one step removed from the accident.

Preferably, the defined technical system can be represented as a control structure diagram in which the interactions of the controller, the controlled process including the controlled object, the commands from the controller and the feedback information from the controlled process are described.

Preferably, the term "possible unsafe control action" means that a certain unsafe control action can be, in dependence on the applying according to step c), an unsafe control action or not. For example, an unsafe control action is a command from the controller, which was not, too early or too late transmitted to the controlled process. Specifically, the set of unsafe control actions are erroneous control actions which are leading to the at least one hazard.

The first simulation and the second simulation can be implemented as a software, for example, as a computer program, as a routine or a executable object. In particular, the first and the second simulation are functional simulations.

An example of feedback information is the position of the controlled object, for example, the door position and/or whether there is a door obstruction in the door present. In particular, feedback information is a control feedback failure information of information, instructions or commands from the controlled process to the controller. For example, feedback information can be a instruction or a command from the controlled process, which was not, too early or too late transmitted to the controller.

Preferably, a causal scenario is the real or actual cause why the at least one hazard is occurred. Preferably, the term "possible causal scenario" means that the causal scenario can be, in dependence on the applying according to step e), a causal scenario or not.

According to a further embodiment, the deriving of step f) includes:
deriving redefined safety constraints using the identified set of causal scenarios by negating the causal scenarios out of the identified set of causal scenarios.

For example, a causal scenario is formed as the information "door obstruction information is not provided by the door to the controller" or "door obstruction information is provided too late by the door to the controller". A negating of these both causal scenarios and thus a respective redefined safety constraint can be formed as the information "door controller must detect if door obstruction information is not provided by the door" or "door controller must detect if door obstruction information is provided too late by the door". In particular, the negating of the feature "not provided" to the feature "must detect if (...) not provided" is a sentence negation.

Moreover, the commands of the controller model are transmitted to the controlled process model. Further, the commands of the controller are transmitted to the controlled process. In particular, the feedback information is also provided or not provided from the controlled process to the controller.

According to a further embodiment, step c) further includes:
deriving safety constraints using the identified set of unsafe control actions.

This embodiment has the advantage that inconsistencies are avoided by automatically deriving a set of safety constraints and a set of redefined safety constraints from the defined technical system at any stage of the system design, whereby system design and (redefined) safety constraints are always consistent and updated to each other.

According to a further embodiment, the deriving of step c) includes:
deriving safety constraints using the identified set of unsafe control actions by negating the unsafe control actions out of the identified set of unsafe control actions.

For example, an unsafe control action is formed as a further control state of the first set of further control states such as "Stop-Closing-Door-Command not provided while a person is standing in the doorway" or "Stop-Closing-Door-Command provided too late while a person is standing in the doorway". A negating of these both unsafe control actions and thus a respective safety constraint can be formed as the information "Stop-Closing-Door-Command must be provided while a person is standing in the doorway" or "Stop-Closing-Door-Command must not be provided too late while a person is standing in the doorway". In particular, the negating of the feature "not provided" to the feature "must be provided" is a sentence negation.

Specifically, the safety constraints are derived in that manner so that the identified unsafe control actions no longer occur, whereas the redefined safety constraints are derived in that manner so that the identified causal scenarios and the resulting at least one derived hazard no longer occur.

According to a further embodiment, the method further comprises:
g) executing the steps b) to f) again if it is detected that at least one of the N control states of the controller model and/or the controlled process model has been modified or redefined for automatically updating the identified set of unsafe control actions, the derived safety constraints, the identified set of causal scenarios and/or the derived refined safety constraints.

This embodiment has the technical effect that at any time, the technical system models, e.g. the controller model and/or the controlled process model, have been changed, the method steps b) to f) can be executed again. Also, this advantageously increases the failure safety and reliability of the individual technical components of the technical system as well as the technical system as a whole since the technical system and its models are always up to date.

According to a further embodiment, the specific guidewords include Systems-Theoretic Process Analysis guidewords and/or hazard and operability guidewords, wherein the Systems-Theoretic Process Analysis guidewords include the guidewords provided, not provided, provided too early, provided too late, stopped to soon and/or applied to long.

Examples for hazard and operability guidewords are: no or not, other than, more, early, less, late, before, part of and/or after.

According to a further embodiment, step c) further includes:
removing all control states of the first set of further control states added during step b) to the provided controller model which do not lead to a respective unsafe control action out of the identified set of unsafe control actions from the extended controller model.

Thus, the superfluous further control states which do not lead to a respective unsafe control action are removed from the extended controller model, which makes it clearer and smaller in terms of file size, thus saving storage space. This results in a reduced extended controller model, which only consists of the control states N of the controller model and the added further control states of the first set of further control states which have led to a respective unsafe control action.

According to a further embodiment, the controlled process includes an actuator, a sensor and a controlled object, wherein the actuator receives the commands from the controller for controlling the controlled object based on the received commands, the controlled object performs a task based on the commands and the sensor receives signals from the controlled object indicating a result of the performed task and feedbacks the result to the controller.

In particular, an actuator is a component of a machine that is responsible for moving and controlling a mechanism or system, for example, by opening a valve or by controlling the motion of a train door.

Preferably, an example for a sensor is a train door sensor for detecting if a train door is closed or open.

Specifically, the controlled object is a physical object such as a train door or a valve.

For example, a task is "close the train door" or "open the train door". A feedback can be information that indicates whether the train door is then actually closed or open.

According to a further embodiment, the controller model and the controlled process model are represented as a respective state machine, in particular as a finite state machine, wherein the state machine of the controller model as well as the state machine of the controlled process model describe a behavior of a controlled object model which describes the controlled object, wherein the state machine of the controller model includes a first state, a first state transition, a second state and a second state transition of the controlled object model, wherein the state machine of the controlled process model includes also the first state transition and the second state transition, wherein the at least one failure state corresponds at least to the second state transition.

Preferably, a behavior is a control behavior of the controlled object, i.e. which commands the controlled object receives from the controller and which tasks the controlled process including the controlled object performs in response.

The extended controller model and/or the extended controlled process model can also be represented as a respective state machine, in particular as a finite state machine.

In particular, the controller model, the extended controller model, the controlled process model and/or the extended controlled process model can also be represented as a differential equation.

According to a further embodiment, the state machine of the controller model includes a first transition from the first state via the first state transition in dependence on a certain one of the commands of the controller model to the second state and a second transition from the second state via the second state transition in dependence on a further certain one of the commands of the controller model back to the first state.

According to a further embodiment, the adding according to step b) further includes:
directly or indirectly connecting the added first set of further control states, assigned to the at least one failure state, to the at least one failure state of the controller model, wherein a respective possible unsafe control action is formed as a state or a state transition of at least one of the commands of the controller model.

According to a further embodiment, the applying according to step d) further includes:
determining, by applying the first simulation, for each possible unsafe control action, whether a respective possible unsafe control action leads to the at least one failure state, wherein, if the respective possible unsafe control action leads to the at least one failure state, the respective possible unsafe control action is designated as an unsafe control action for identifying the set of unsafe control actions.

According to a further embodiment, the adding according to step d) further includes:
directly or indirectly connecting the added second set of further control states, assigned to the at least one failure state, to the at least one failure state of the controlled process model.

According to a further embodiment, the applying according to step e) further includes:
determining, by applying the second simulation, for each possible causal scenario, whether a respective possible causal scenario leads to the at least one hazard, wherein, if the respective possible causal scenario leads to the at least one hazard, the respective possible causal scenario is designated as a causal scenario for identifying the set of causal scenarios.

According to a further embodiment, at least the steps b) to f) are performed during a Systems-Theoretic Process Analysis.

Preferably, a Systems-Theoretic Process Analysis (STPA) is a hazard or safety analysis method for analyzing technical systems. Human beings with their actions can be considered in the analysis as well as programmable units. Furthermore, STPA is designed as a top-down method and is therefore particularly suitable for the use during development.

Any embodiment of the first aspect may be combined with any embodiment of the first aspect to obtain another embodiment of the first aspect.

According to a second aspect, a computer program product is proposed which comprises a program code for executing the computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, an apparatus for safety analysis in a technical system including a controller and a controlled process controlled by commands from the controller is proposed. The apparatus comprising:
a provision unit for providing a controller model and a controlled process model, wherein each of the controller model and the controlled process model includes N control states including at least a failure state causing at least one hazard which can occur in the technical system, with N ≥ 1,
a first application unit for applying specific guidewords to the commands associated to the at least one failure state for providing a first set of further control states and for extending the provided controller model by adding the first set of further control states for obtaining an extended controller model, wherein each further control state of the first set is a possible unsafe control action,
a second application unit for applying a first simulation to each possible unsafe control action based on the extended controller model and the controlled process model for identifying a set of unsafe control actions,
a third application unit for applying the specific guidewords to feedback information being provided from the controlled process model to the controller model and associated to the at least one failure state for providing a second set of further control states and for extending the provided controlled process model by adding the second set of further control states for obtaining an extended controlled process model, wherein each further control state of the second set is a possible causal scenario,
a fourth application unit for applying a second simulation to each possible causal scenario based on the extended controller model and the extended controlled process model for identifying a set of causal scenarios, wherein each of the set of causal scenarios corresponds to a certain one of the feedback information causing the at least one hazard, wherein each of the unsafe control actions of the identified set results from a corresponding causal scenario of the identified set of causal scenarios, and
a derivation unit for deriving redefined safety constraints using the identified set of causal scenarios.

According to an embodiment of the apparatus, the second application unit comprises:
a further derivation unit for deriving safety constraints using the identified set of unsafe control actions.

According to a further embodiment of the apparatus, the apparatus further comprises:
a detection unit for detecting whether at least one of the N control states of the controller model and/or the controlled process model has been modified or redefined, and
an update unit for automatically executing the first application unit, the second application unit, the third application unit, the fourth application unit, the derivation unit and/or the further derivation unit again, if it is detected by the detection unit that at least one of the N control states of the controller model and/or the controlled process model has been modified or redefined, for automatically updating the identified set of unsafe control actions, the derived safety constraints, the identified set of causal scenarios and/or the derived refined safety constraints.

The technical effects and advantages described for the computer-implemented method according to the first aspect apply equally to the apparatus according to the third aspect.

The embodiments and features described with reference the computer-implemented method according to the first aspect apply mutatis mutandis to the apparatus according to the third aspect.

Preferably, the apparatus is a control unit or part of a control unit for executing the method steps of the above-described computer-implemented method according to the first aspect or embodiments of the first aspect.

The respective unit, e.g. the provision unit, the first application unit, the derivation unit or the control unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a computer-implemented method for safety analysis in a technical system;
- Figs. 2A - 2E: show embodiments of method steps of the computer-implemented method according to Fig. 1 based on a train door system; and
- Fig. 3: shows an apparatus for safety analysis in a technical system.

In the Figures, like reference numerals designate like or functionally equivalent elements, unless otherwise indicated.

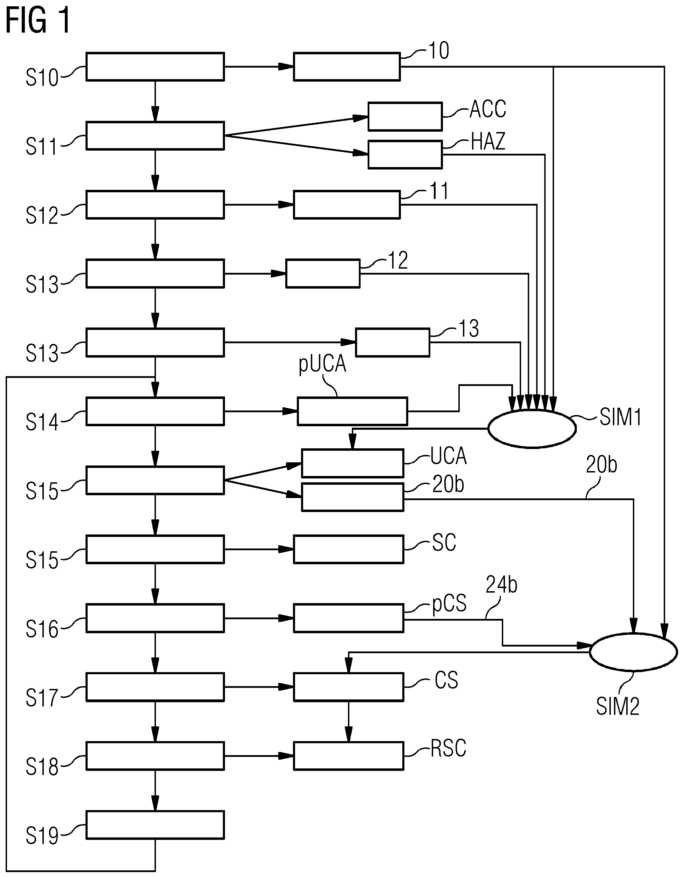

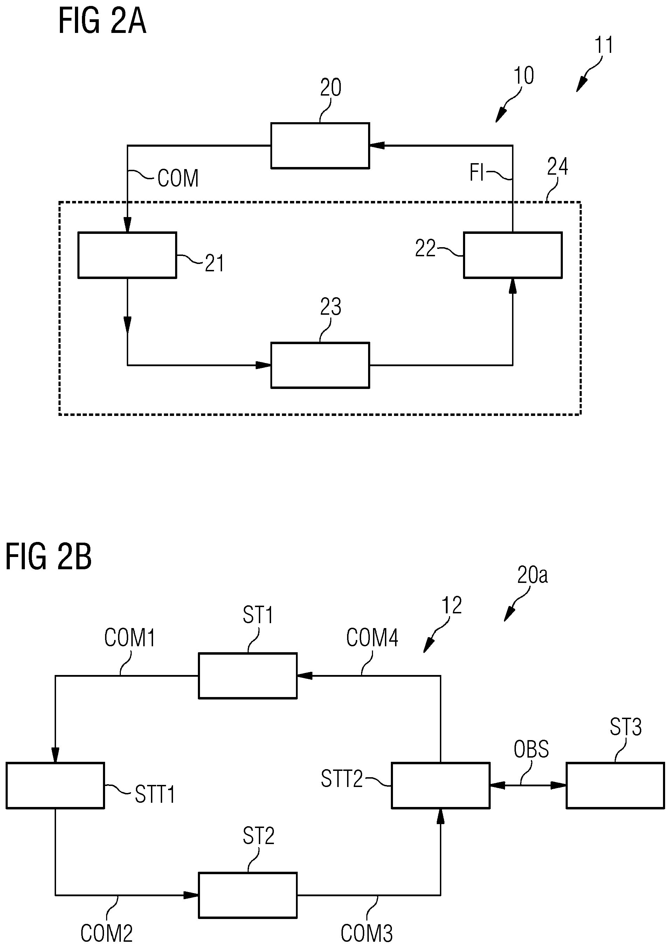

Fig. 1 shows a computer-implemented method for safety analysis in a technical system 10 (see also Fig. 2A) including a controller 20 (see Fig. 2A) and a controlled process 24 (see Fig. 2A) controlled by commands COM (see Fig. 2A) from the controller 20. The computer-implemented method comprises the method steps S13 to S18. In the embodiment in Fig. 1, the computer-implemented method further comprises the method steps S10 to S12 and S19.

In method step S10, the above-described technical system 10 is defined and output.

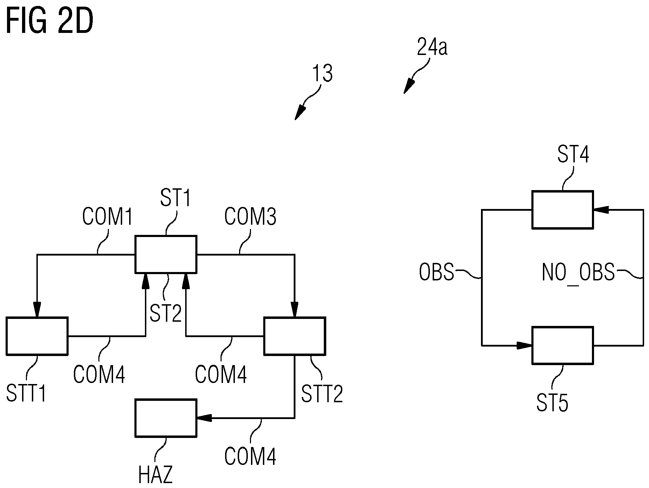

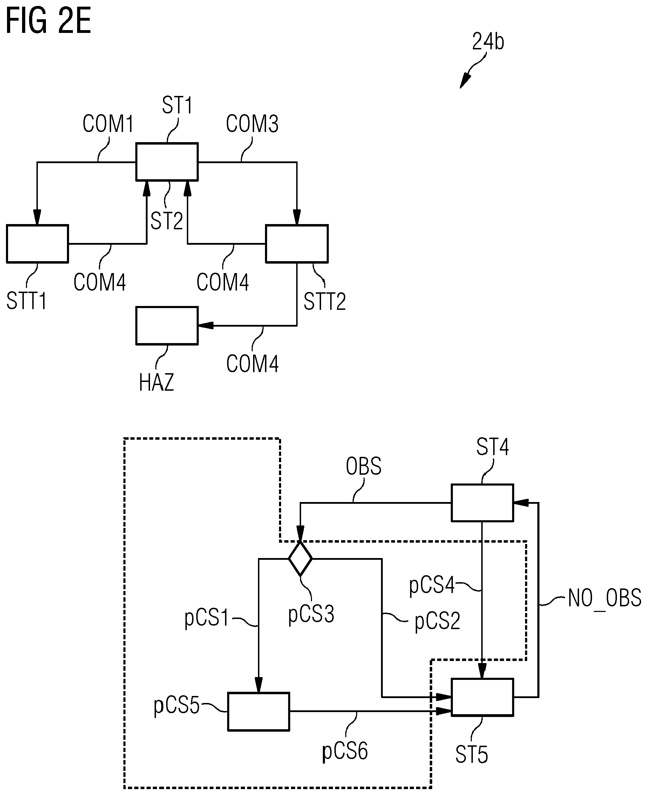

Further, in method step S11, from the defined technical system 10, at least one hazard HAZ (see also Fig. 2D or 2E) which can occur in the technical system 10 and which can lead to at least one accident ACC is derived. As shown in Fig. 1, the at least one derived hazard HAZ and the at least one accident ACC are the output of method step S11.

Moreover, in method step S12, the defined technical system 10 is transferred into a specific representation, in particular a control structure diagram 11 (see also Fig. 2A), which is the output of method step S12.

Next, in method step S13, a controller model 20a (see Fig. 2B) and a controlled process model 24a (see Fig. 2D) are provided. Each of the controller model 20a and the controlled process model 24a includes N control states including at least a failure state causing at least one hazard HAZ which can occur in the technical system 10, with N ≥ 1. In Fig. 1 and the following Figs. 2A - 2E, the controller model 20a and a controlled process model 24a are represented as a state machine, in particular as a finite state machine. Thus, the output of method step S13 in Fig. 1 is a state machine 12 (see also Fig. 2B) of the controller model 20a as well as a state machine 13 (see also Fig. 2D) of the controlled process model 24a.

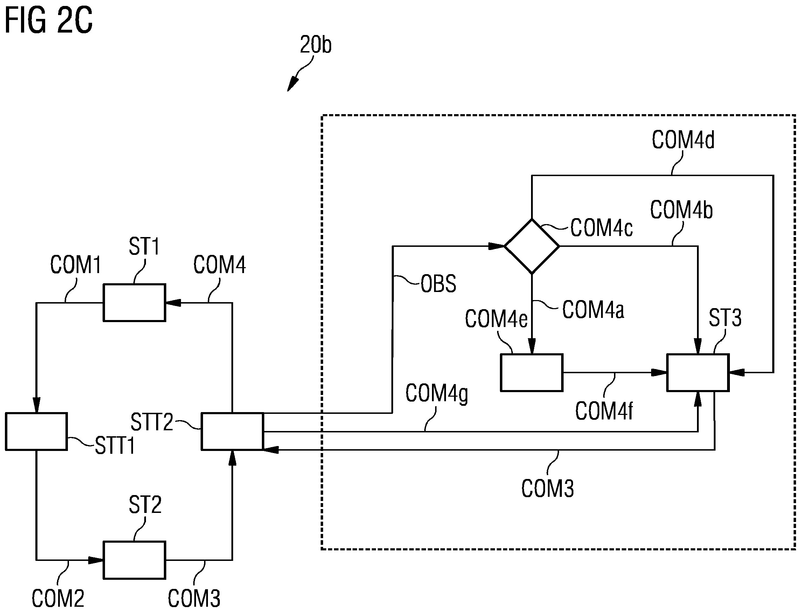

Then, in method step S14, specific guidewords are applied to the commands COM associated to the at least one failure state for providing a first set of further control states and the provided controller model 20a is extended by adding the first set of further control states for obtaining, as an output of method step S14, an extended controller model 20b (see also Fig. 2C). Each further control state of the first set is a possible unsafe control action pUCA. Thus, the possible unsafe control actions pUCA are a further output of method step S14.

After that, in method step S15, a first simulation SIM1 is applied to each possible unsafe control action pUCA based on the defined technical system 10, the derived at least one hazard HAZ, the control structure diagram 11, the state machine 12 of the controller model 20a, the state machine 13 of the controlled process model 24a, the extended controller model 20b and the controlled process model 20a for identifying, as an output of method step S15, a set of unsafe control actions UCA.

Also, in method step S15, safety constraints SC are derived using the identified set of unsafe control actions UCA.

Furthermore, in method step S16, the specific guidewords are applied to feedback information FI (see Fig. 2A) being provided from the controlled process model 24a to the controller model 20a and associated to the at least one failure state for providing a second set of further control states and the provided controlled process model 24a is extended by adding the second set of further control states for obtaining an extended controlled process model 24b (see also Fig. 2E). Each further control state of the second set is a possible causal scenario pCS. Thus, the possible causal scenarios pCS are an output of method step S16.

In the next method step S17, a second simulation SIM2 is applied to each possible causal scenario pCS based on the defined technical system 10, the extended controller model 20b and the extended controlled process model 24b for identifying, as an output of method step S17, a set of causal scenarios CS.

In the embodiment of Fig. 1, each causal scenario of the set of causal scenarios CS corresponds to a certain one of the feedback information FI causing the at least one hazard HAZ. In addition, each of the unsafe control actions UCA of the identified set results from a corresponding causal scenario of the identified set of causal scenarios CS.

Moreover, in method step S18, redefined safety constraints RSC are derived using the identified set of causal scenarios CS.

At least, in method step S19, the method steps S14 - S18 are executed again if it is detected that at least one of the N control states of the controller model 20a and/or the controlled process model 24a has been modified or redefined for automatically updating the identified set of unsafe control actions UCA, the derived safety constraints SC, the identified set of causal scenarios CS and/or the derived refined safety constraints RSC. In Fig. 1, this is shown with the connection with the arrow on one end from the output of method step S19 to the input of method step S14. Also, in Fig. 1, the method steps S14 - S18 are performed during a Systems-Theoretic Process Analysis.

Figs. 2A - 2E show embodiments of method steps of the computer-implemented method according to Fig. 1 based on a train door system.

In Fig. 2A, the defined technical system 10 (see also Fig. 1) is a train door system and it is represented as a control structure diagram 11 (see also Fig. 1).

The defined technical system 10 includes a controller 20 and a controlled process 24. In Fig. 2A, the controlled process 24 includes an actuator 21, a sensor 22 and a controlled object 23. The actuator 21 receives the commands COM from the controller 20 for controlling the controlled object 23 based on the received commands COM. Then, the controlled object 23 performs a task based on the commands COM and the sensor 22 receives signals from the controlled object 23 indicating a result of the performed task and feedbacks, in particular as feedback information FI, the result to the controller 20.

Fig. 2B shows a state machine 12 (see also Fig. 1), in Fig. 2B a finite state machine, of the controller model 20a.

The state machine 12 of the controller model 20a includes a first state ST1 (see also Figs. 2C - 2E), a first state transition STT1 (see also Figs. 2C - 2E), a second state ST2 (see also Figs. 2C - 2E) and a second state transition STT2 (see also Figs. 2C - 2E) of a controlled object model included in the controlled process model 24a (see Fig. 2D). In Fig. 2B, the first state ST1 is the initial state and is formed as the state "door closed". The first state transition STT1 is in Fig. 2B the transition "door opening", the second state is the state "door open" and the second state transition STT2 is the transition "door closing". The state machine 12 of the controller model 20a includes a first transition from the first state ST1 via the first state transition STT1 in dependence on a certain one of the commands COM (see Fig. 2A) of the controller model 20a to the second state ST2. For example, the certain one command is a command COM1 (see also Figs. 2C - 2E) formed as "Open-Door-Command". If the controlled object 23 (see Fig. 2A) reaches the second state ST2, sensed by the sensor 22 (see Fig. 2A), the controller model 20a sends another command COM2 (see also Fig. 2C) formed as "Stop-Opening-Door-Command". Then, the controlled object 23 is in the second state ST2.

In addition, the state machine 12 of the controller model 20a includes a second transition from the second state ST2 via the second state transition STT2 in dependence on a further certain one of the commands COM of the controller model 20a back to the first state ST1. For example, the further certain one command is a command COM3 (see also Figs. 2C - 2E) formed as "Close-Door-Command". If the controlled object 23 reaches the first state ST1, sensed by the sensor 22, the controller model 20a sends another further command COM4 (see also Figs. 2C - 2E) formed as "Stop-Closing-Door-Command". Then, the controlled object 23 is again in the first state ST1.

In Fig. 2B, the at least one failure state corresponds to the second state transition STT2. Thus, the failure state in Fig. 2B is the state transition, namely "door closing", causing the hazard HAZ (see Fig. 1, 2D or 2E).

This is shown in Fig. 2B based on the door obstruction OBS (see also Figs. 2C - 2E) detected by the sensor 22 of the controlled object 23 during the second state transition STT2 which leads to a third state ST3 (see also Fig. 2C), namely "closing stopped". The third state ST3 results from the another further command COM4 "Stop-Closing-Door-Command" from the controller model 20a.

Thus, the detected door obstruction OBS is the reason for the failure state and causing the hazard HAZ.

Further, in Fig. 2C, the extended controller model 20b (see also Fig. 1) is shown. It comprises all features of the controller model 20a of Fig. 2B. Fig. 2C shows that, based on the detected door obstruction OBS (see also Fig. 2B, 2D or 2E), the first set of further control states, assigned to the second state transition STT2 (see also Fig. 2B, 2D or 2E) which is the failure state, are added to the second state transition STT2 (this is shown in Fig. 2C by the dashed rectangle).

In addition, the extended controller model 20b is obtained by the above-mentioned method step S14 (see Fig. 1). Further, the adding according to method step S14 further includes directly or indirectly connecting the added first set of further control states, assigned to the at least one failure state, to the at least one failure state of the controller model 20a (see Fig. 2B).

A respective possible unsafe control action pUCA (see Fig. 1) is formed as a state or a state transition of at least one of the commands COM (see Fig. 2A) of the controller model 20a.

For example, Fig. 2C shows multiple further control states of the first set of further control states which are designated in Fig. 2C with COM4a, COM4b, COM4c, COM4d, COM4e, COM4f and COM4g.

COM4a is an added further control state based on a combination of the command "Stop-Closing-Door-Command" with the guideword "provided too late". Therefore, a possible unsafe control action pUCA is that the command "Stop-Closing-Door-Command" is "provided too late". In a similar way, the further control states designated in Fig. 2C with COM4b, COM4c, COM4d, COM4e, COM4f and COM4g are described. Further examples of specific guidewords including Systems-Theoretic Process Analysis guidewords used in terms of Fig. 2C and 2E are the guidewords "provided", "not provided", "provided too early", "provided too late", "stopped to soon" and "applied to long". In embodiments not shown, also hazard and operability guidewords can be used.

COM4b is an added further control state based on a combination of the command "Stop-Closing-Door-Command" with the guideword "not provided". Thus, a possible unsafe control action pUCA is that the command "Stop-Closing-Door-Command" is "not provided".

Further, COM4c is an added further control state formed as a constraint rectangle for distinguishing the different added further control states, COM4d is an added further control state based on a combination of the command "Stop-Closing-Door-Command" with no guidewords used since COM4d is the case if the command "Stop-Closing-Door-Command" is normally transmitted to the third state ST3 (see also Fig. 2B) shown in Fig. 2C. In addition, COM4e is a state designated as "delayed for 15 sec" based on the added further control state COM4a which is provided too late, namely 15 seconds. COM4f is an added further control state formed as the command "Stop-Closing-Door-Command" but provided 15 seconds too late to the third state ST3. Moreover, COM4g is an added further control state based on a combination of the command "Stop-Closing-Door-Command" with the guideword "provided". Thus, a possible unsafe control action pUCA is that the command "Stop-Closing-Door-Command" is "provided".

Furthermore, in Fig. 2C, the further certain one command is the command COM3 (see also Fig. 2B, 2D or 2E) formed as "Close-Door-Command" extending from the third state ST3 to the second state transition STT2 since no door obstruction OBS is detected.

After the possible unsafe control actions pUCA are obtained, the method step S16 (see Fig. 1) further includes:
determining, by applying the first simulation SIM1 (see Fig. 1), for each possible unsafe control action pUCA, whether a respective possible unsafe control action pUCA leads to the at least one failure state, wherein, if the respective possible unsafe control action pUCA leads to the at least one failure state, the respective possible unsafe control action pUCA is designated as an unsafe control action for identifying the set of unsafe control actions UCA (see Fig. 1).

Then, the set of unsafe control actions UCA comprises the unsafe control actions "UCA1: Stop-Door-Closing-Command not provided while a person is standing in the doorway" and "UCA2: Stop-Door-Closing-Command provided too late while a person is standing in the doorway". These both unsafe control actions are based on the added further control states COM4a and COM4b.

Afterwards, according to method step S15 (see Fig. 1), safety constraints SC (see Fig. 1) are derived using the set of unsafe control actions UCA. In this case, the derived safety constraints SC are "SC1: Stop-Door-Closing-Command must be provided while a person is standing in the doorway" and "SC2: Stop-Door-Closing-Command must not be provided too late while a person is standing in the doorway".

Subsequently, after that, according to method step S15 above, method step S15 further includes that all control states of the first set of further control states added during method step S14 to the provided controller model 20a which do not lead to a respective unsafe control action out of the identified set of unsafe control actions UCA are removed from the extended controller model 20b. In this case, these are the added further control states COM4d and COM4g.

Fig. 2D shows a state machine 13 (see also Fig. 1), in Fig. 2D a finite state machine, of the controlled process model 24a.

The state machine 13 of the controlled process model 24a includes also a first state ST1 (see also Fig. 2B, 2C or 2E), a first state transition STT1 (see also Fig. 2B, 2C or 2E), a second state ST2 (see also Fig. 2B, 2C or 2E) and a second state transition STT2 (see also Fig. 2B, 2C or 2E) of the controlled object model included in the controlled process model 24a. In Fig. 2D, the first state ST1 and the second state ST2 are forming together the initial state.

Further, Fig. 2D includes the certain one command COM1 (see also Fig. 2B, 2C or 2E), the further certain one command COM3 (see also Fig. 2B, 2C or 2E) and the another further command COM4 (see also Fig. 2B, 2C or 2E). Moreover, in Fig. 2D, based on the second state transition STT2 and the another further command COM4, it is shown that the another further command COM4 is involved in causing the hazard HAZ (see also Fig. 1 or 2E).

In addition, the state machine 13 of the controlled process model 24a of Fig. 2D includes a further state machine including a fourth state ST4 (see also Fig. 2E), a fifth state ST5 (see also Fig. 2E), the detected door obstruction OBS (see also Fig. 2B, 2C or 2E) and a state transition NO_OBS (see also Fig. 2E) which means that no door obstruction OBS is detected. The fourth state ST4 is the initial state of the further state machine formed as "no object in doorway", wherein the fifth state ST5 is formed as "object in doorway". The further state machine in Figs. 2D and 2E functions in that manner that if it is detected there is a door obstruction OBS, the further state machine transitions to the fifth state ST5 and if it is detected there is no door obstruction, the further state machine transitions to the fourth state ST4.

Since in Fig. 2D, during the second state transition STT2, the door obstruction OBS is detected and the added further control state COM4 is falsified provided to the controller model 20a, the hazard HAZ occurs.

Further, in Fig. 2E, the extended controlled process model 24b (see also Fig. 1) is shown. It comprises all features of the controlled process model 24a of Fig. 2D. In Figs. 2C and 2D not shown, the state machine 13 (see also Fig. 1 or 2D) and the further state machine are connected between the second state transition STT2 (see also Figs. 2B - 2D) and the fourth state ST4 (see also Fig. 2D).

Fig. 2E shows that, based on the detected door obstruction OBS (see also Figs. 2B - 2D), the second set of further control states is added to the detected door obstruction OBS and the second state transition STT2 via the fourth state ST4 (this is shown in Fig. 2E by the dashed rectangle).

In addition, the extended controlled process model 24b is obtained by the above-mentioned method step S16 (see Fig. 1). Further, the adding according to method step S16 further includes directly or indirectly connecting the added second set of further control states, assigned to the at least one failure state, to the at least one failure state of the controlled process model 24a (see Fig. 2D). This is done via the not shown connection between the second state transition STT2 and the fourth state ST4. Each further control state of the second set is a possible causal scenario pCS (see Fig. 1) .

In particular, a respective possible causal scenario pCS corresponds to a certain one of the feedback information FI (see Fig. 2A) causing the at least one hazard HAZ (see also Fig. 1, 2C or 2D). Further, feedback information FI being provided from the controlled process model 24a to the controller model 20a (see Fig. 2B).

For example, Fig. 2E shows multiple further control states of the second set of further control states corresponding to respective specific possible causal scenarios pCS which are designated in Fig. 2E with pCS1, pCS2, pCS3, pCS4, pCS5 and pCS6.

pCS1 is an added further control state based on a combination of the feedback information FI "door obstruction information" with the guideword "provided too late". Therefore, a specific possible causal scenario pCS is that the feedback information FI "door obstruction information" is "provided too late". In a similar way, the further control states designated in Fig. 2E with pCS2, pCS3, pCS4, pCS5 and pCS6 are described.

pCS2 is an added further control state based on a combination of the feedback information FI "door obstruction information" with the guideword "not provided". Thus, a specific possible causal scenario pCS is that the feedback information FI "door obstruction information" is "not provided".

Further, pCS3 is an added further control state formed as a constraint rectangle for distinguishing the different added further control states, pCS4 is an added further control state based on a combination of the feedback information FI "door obstruction information" with no guidewords used since pCS4 is the case if the feedback information FI "door obstruction information" is normally transmitted to the fifth state ST5 (see also Fig. 2D) shown in Fig. 2E. In addition, pSC5 is a state designated as "delayed for 15 sec" based on the added further control state pCS1 which is provided too late, namely 15 seconds. pCS6 is an added further control state formed as the feedback information FI "door obstruction information" but provided 15 seconds too late to the fifth state ST5.

After the possible causal scenarios pCS are obtained, the method step S17 (see Fig. 1) further includes:
determining, by applying the second simulation SIM2 (see Fig. 1), for each possible causal scenario pCS, whether a respective possible causal scenario pCS leads to the at least one hazard HAZ (see Fig. 1, 2D or 2E), wherein, if the respective possible causal scenario pCS leads to the at least one hazard HAZ, the respective possible causal scenario pCS is designated as a causal scenario for identifying the set of causal scenarios CS (see Fig. 1).

Then, the set of causal scenarios CS comprises the causal scenarios "CS1: door obstruction information is not provided by the door" and "CS2: door obstruction information is provided too late by the door". These both causal scenarios are based on the added further control states pCS1 and pCS2.

Afterwards, according to method step S18 (see Fig. 1), redefined safety constraints RSC (see Fig. 1) are derived using the set of causal scenarios CS. In this case, the derived redefined safety constraints RSC are "RSC1: door controller must detect if door obstruction information is not provided by the door" and "RSC2: door controller must detect if door obstruction information is provided too late by the door".

Consequently, based on Figs. 2A - 2E, due to the fact that the "door obstruction information" was not or too late provided from the controlled process model 24a (see Fig. 2D) to the controller model 20a (Fig. 2B) as feedback information FI (see Fig. 2A), the set of unsafe control actions UCA (see Fig. 1) occurred. This leads to that the controller model 20a did not or too late provide the "Stop-Closing-Door-Command" to the controlled process model 24a (see Fig. 2C), which in the end caused the hazard HAZ (see Fig. 1, 2D or 2E). The cause of the hazard HAZ ("door closes although a person was standing in the door") is therefore that the "door obstruction information" was not provided or was provided too late by the controlled process model 24a. This then led to the accident ACC (see Fig. 1), namely that a human being was injured.

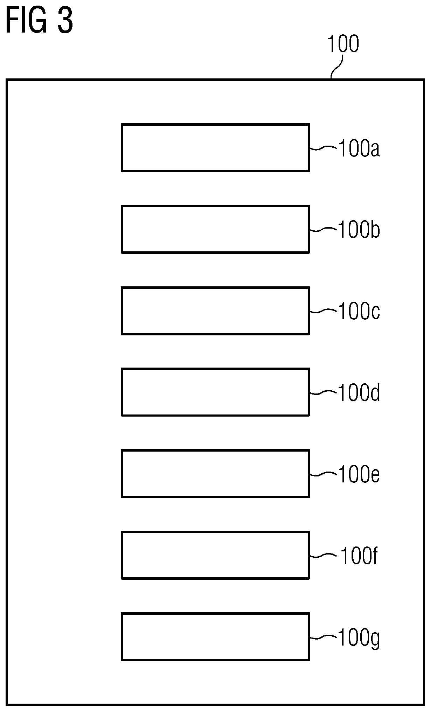

Fig. 3 shows an apparatus 100 for safety analysis in a technical system 10 (see Fig. 1 or 2A) including a controller 20 (see Fig. 2A) and a controlled process 24 (see Fig. 2A) controlled by commands COM (see Fig. 2A) from the controller 20.

The apparatus 100 of Fig. 3 comprises a provision unit 100a, a first application unit 100b, a second application unit 100c, a third application unit 100d, a fourth application unit 100e, a derivation unit 100f. Further, in the embodiment in Fig. 3, the apparatus 100 includes an update unit 100g.

The provision unit 100a is configured to provide a controller model 20a (see Fig. 2B) and a controlled process model 24a (see Fig. 2D), wherein each of the controller model 20a and the controlled process model 24a includes N control states including at least a failure state causing at least one hazard HAZ (see Fig. 1, 2D or 2E) which can occur in the technical system 10, with N ≥ 1.

Further, the first application unit 100b is configured to apply specific guidewords to the commands COM associated to the at least one failure state for providing a first set of further control states and for extending the provided controller model 20a by adding the first set of further control states for obtaining an extended controller model 20b (see Fig. 1 or 2C), wherein each further control state of the first set is a possible unsafe control action pUCA (see Fig. 1) .

Moreover, the second application unit 100c is configured to apply a first simulation SIM1 (see Fig. 1) to each possible unsafe control action pUCA based on the extended controller model 20b and the controlled process model 24a for identifying a set of unsafe control actions UCA (see Fig. 1). Further, the second application unit 100c comprises a further derivation unit. The further derivation unit is configured to derive safety constraints SC using the identified set of unsafe control actions UCA.

Furthermore, the third application unit 100d is configured to apply the specific guidewords to feedback information FI (see Fig. 2A) being provided from the controlled process model 24a to the controller model 20a and associated to the at least one failure state for providing a second set of further control states and for extending the provided controlled process model 24a by adding the second set of further control states for obtaining an extended controlled process model 24b (see Fig. 1 or 2E), wherein each further control state of the second set is a possible causal scenario pCS.

Additionally, the fourth application unit 100e is configured to apply a second simulation SIM2 (see Fig. 1) to each possible causal scenario pCS based on the extended controller model 20b and the extended controlled process model 24b for identifying a set of causal scenarios CS (see Fig. 1), wherein each causal scenario of the set of causal scenarios CS corresponds to a certain one of the feedback information FI causing the at least one hazard HAZ, wherein each of the unsafe control actions of the identified set results from a corresponding causal scenario of the identified set of causal scenarios CS.

Then, the derivation unit 100f is configured to derive redefined safety constraints RSC (see Fig. 1) using the identified set of causal scenarios CS.

Moreover, the apparatus 100 includes a detection unit for detecting whether at least one of the N control states of the controller model 20a and/or the controlled process model 24a has been modified or redefined.

At least, the update unit 100g is configured to automatically execute the first application unit 100b, the second application unit 100c, the third application unit 100d, the fourth application unit 100e, the derivation unit 100f and/or the further derivation unit again, if it is detected by the detection unit that at least one of the N control states of the controller model 20a and/or the controlled process model 24a has been modified or redefined, for automatically updating the identified set of unsafe control actions UCA, the derived safety constraints SC, the identified set of causal scenarios CS and/or the derived refined safety constraints RSC.

Although the present invention has been described in accordance with preferred embodiments, it is obvious for the person skilled in the art that modifications are possible in all embodiments.

## Claims

1. Computer-implemented method for safety analysis in a technical system (10) including a controller (20) and a controlled process (24) controlled by commands (COM) from the controller (20), the method comprising:
a) providing (S13) a controller model (20a) and a controlled process model (24a), wherein each of the controller model (20a) and the controlled process model (24a) includes N control states including at least a failure state causing at least one hazard (HAZ) which can occur in the technical system (10), with N ≥ 1,
b) applying (S14) specific guidewords to the commands (COM) associated to the at least one failure state for providing a first set of further control states and extending the provided controller model (20a) by adding the first set of further control states for obtaining an extended controller model (20b), wherein each further control state of the first set is a possible unsafe control action (pUCA),
c) applying (S15) a first simulation (SIM1) to each possible unsafe control action (pUCA) based on the extended controller model (20b) and the controlled process model (20a) for identifying a set of unsafe control actions (UCA),
d) applying (S16) the specific guidewords to feedback information (FI) being provided from the controlled process model (24a) to the controller model (20a) and associated to the at least one failure state for providing a second set of further control states and extending the provided controlled process model (24a) by adding the second set of further control states for obtaining an extended controlled process model (24b), wherein each further control state of the second set is a possible causal scenario (pCS),
e) applying (S17) a second simulation (SIM2) to each possible causal scenario (pCS) based on the extended controller model (20b) and the extended controlled process model (24b) for identifying a set of causal scenarios (CS), wherein each causal scenario of the set of causal scenarios (CS) corresponds to a certain one of the feedback information (FI) causing the at least one hazard (HAZ), wherein each of the unsafe control actions (UCA) of the identified set results from a corresponding causal scenario of the identified set of causal scenarios (CS), and
f) deriving (S18) redefined safety constraints (RSC) using the identified set of causal scenarios (CS).

2. Method according to claim 1,
**characterized in**
**that** step c) (S15) further includes:
deriving safety constraints (SC) using the identified set of unsafe control actions (UCA).

3. Method according to claim 2,
**characterized by**:
g) executing (S19) the steps b) to f) (S14 - S18) again if it is detected that at least one of the N control states of the controller model (20a) and/or the controlled process model (24a) has been modified or redefined for automatically updating the identified set of unsafe control actions (UCA), the derived safety constraints (SC), the identified set of causal scenarios (CS) and/or the derived refined safety constraints (RSC).

4. Method according to one of claims 1 - 3,
**characterized in**
**that** the specific guidewords include Systems-Theoretic Process Analysis guidewords and/or hazard and operability guidewords, wherein the Systems-Theoretic Process Analysis guidewords include the guidewords provided, not provided, provided too early, provided too late, stopped to soon and/or applied to long.

5. Method according to one of claims 1 - 4,
**characterized in**
**that** step c) (S15) further includes:
removing all control states of the first set of further control states added during step b) (S14) to the provided controller model (20a) which do not lead to a respective unsafe control action out of the identified set of unsafe control actions (UCA) from the extended controller model (20b) .

6. Method according to one of claims 1 - 5,
**characterized in**
**that** the controlled process (24) includes an actuator (21), a sensor (22) and a controlled object (23), wherein the actuator (21) receives the commands (COM) from the controller (20) for controlling the controlled object (23) based on the received commands (COM), the controlled object (23) performs a task based on the commands (COM) and the sensor (22) receives signals from the controlled object (23) indicating a result of the performed task and feedbacks the result to the controller (20).

7. Method according to claim 6,
**characterized in**
**that** the controller model (20a) and the controlled process model (24a) are represented as a respective state machine, in particular as a finite state machine, wherein the state machine (12) of the controller model (20a) as well as the state machine (13) of the controlled process model (24a) describe a behavior of a controlled object model which describes the controlled object (23), wherein the state machine (12) of the controller model (20a) includes a first state (ST1), a first state transition (STT1), a second state (ST2) and a second state transition (STT2) of the controlled object model, wherein the state machine (13) of the controlled process model (24a) includes also the first state transition (STT1) and the second state transition (STT2), wherein the at least one failure state corresponds at least to the second state transition (STT2).

8. Method according to claim 7,
**characterized in**
**that** the state machine (12) of the controller model (20a) includes a first transition from the first state (ST1) via the first state transition (STT1) in dependence on a certain one of the commands (COM) of the controller model (20a) to the second state (ST2) and a second transition from the second state (ST2) via the second state transition (STT2) in dependence on a further certain one of the commands (COM) of the controller model (20a) back to the first state (ST1).

9. Method according to claim 8,
**characterized in**
**that** the adding according to step b) (S14) further includes:
directly or indirectly connecting the added first set of further control states, assigned to the at least one failure state, to the at least one failure state of the controller model (20a), wherein a respective possible unsafe control action (pUCA) is formed as a state or a state transition of at least one of the commands (COM) of the controller model (20a) .

10. Method according to claim 9,
**characterized in**
**that** the applying according to step d) (S16) further
includes:
determining, by applying the first simulation (SIM1), for each possible unsafe control action (pUCA), whether a respective possible unsafe control action (pUCA) leads to the at least one failure state, wherein, if the respective possible unsafe control action (pUCA) leads to the at least one failure state, the respective possible unsafe control action (pUCA) is designated as an unsafe control action for identifying the set of unsafe control actions (UCA).

11. Method according to one of claims 7 - 10,
**characterized in**
**that** the adding according to step d) (S16) further includes:
directly or indirectly connecting the added second set of further control states, assigned to the at least one failure state, to the at least one failure state of the controlled process model (24a).

12. Method according to claim 11,
**characterized in**
**that** the applying according to step e) (S17) further
includes:
determining, by applying the second simulation (SIM1), for each possible causal scenario (pCS), whether a respective possible causal scenario (pCS) leads to the at least one hazard (HAZ), wherein, if the respective possible causal scenario (pCS) leads to the at least one hazard (HAZ), the respective possible causal scenario (pCS) is designated as a causal scenario for identifying the set of causal scenarios (CS) .

13. Method according to one of claims 1 - 12,
**characterized in**
**that** at least the steps b) to f) (S14 - S18) are performed during a Systems-Theoretic Process Analysis.

14. A computer program product comprising a program code for executing the computer-implemented method according to one of claims 1 - 13 when run on at least one computer.

15. Apparatus (100) for safety analysis in a technical system (10) including a controller (20) and a controlled process (24) controlled by commands (COM) from the controller (20), the apparatus (100) comprising:
a provision unit (100a) for providing a controller model (20a) and a controlled process model (24a), wherein each of the controller model (20a) and the controlled process model (24a) includes N control states including at least a failure state causing at least one hazard (HAZ) which can occur in the technical system (10), with N ≥ 1,
a first application unit (100b) for applying specific guidewords to the commands (COM) associated to the at least one failure state for providing a first set of further control states and for extending the provided controller model (20a) by adding the first set of further control states for obtaining an extended controller model (20b), wherein each further control state of the first set is a possible unsafe control action (pUCA),
a second application unit (100c) for applying a first simulation (SIM1) to each possible unsafe control action (pUCA) based on the extended controller model (20b) and the controlled process model (24a) for identifying a set of unsafe control actions (UCA),
a third application unit (100d) for applying the specific guidewords to feedback information (FI) being provided from the controlled process model (24a) to the controller model (20a) and associated to the at least one failure state for providing a second set of further control states and for extending the provided controlled process model (24a) by adding the second set of further control states for obtaining an extended controlled process model (24b), wherein each further control state of the second set is a possible causal scenario (pCS),
a fourth application unit (100e) for applying a second simulation (SIM2) to each possible causal scenario (pCS) based on the extended controller model (20b) and the extended controlled process model (24b) for identifying a set of causal scenarios (CS), wherein each of the set of causal scenarios (CS) corresponds to a certain one of the feedback information (FI) causing the at least one hazard (HAZ), wherein each of the unsafe control actions (UCA) of the identified set results from a corresponding causal scenario of the identified set of causal scenarios (CS), and
a derivation unit (100f) for deriving redefined safety constraints (RSC) using the identified set of causal scenarios (CS).
